# EUROPÄISCHE PATENTSCHRIFT

(11) **EP 3 108 240 B1**
(45) Veröffentlichungstag und Bekanntmachung des Hinweises auf die Patenterteilung: **28.11.2018**
(21) Anmeldenummer: 15707271.1
(22) Anmeldetag: 26.01.2015
(51) Int. Cl.: G01N 31/12

(54) **ANALYSATOR FÜR DIE ANALYSE VON KOHLENSTOFF (C) UND SCHWEFEL (S) IN METALLEN**
ANALYZER FOR ANALYZING CARBON (C) AND SULFUR (S) IN METALS
ANALYSEUR D'ANALYSE DU CARBONE (C) ET DU SOUFRE (S) DANS LES MÉTAUX

(30) Priorität: 18.02.2014 DE 102014002070
(43) Veröffentlichungstag der Anmeldung: 28.12.2016
(73) Patentinhaber: Elementar Analysensysteme GmbH, 63452 Hanau (DE)
(72) Erfinder: KUPKA, Hans-Joachim, 63453 Neuberg (DE); SIEPER, Hans-Peter, 63571 Gelnhausen (DE); LANGE, Lutz, 60599 Frankfurt am Main (DE); WÜRFEL, Oliver, 63303 Dreieich (DE)
(74) Vertreter: Grimm, Ekkehard
(86) Internationale Anmeldenummer: PCT/EP2015/000138
(87) Internationale Veröffentlichungsnummer: WO 2015/124254

(56) Entgegenhaltungen:
- EP-A2- 2 224 238
- WO-A1-2012/097784
- DE-A1-102005 014 705
- JP-A- H0 798 307
- DATABASE WPI Week 198509 Thomson Scientific, London, GB; AN 1985-053674 XP002741474, -& JP S60 11084 A (DAIDO TOKUSHUKO KK) 21. Januar 1985 (1985-01-21)

## Beschreibung

Die Erfindung betrifft einen Analysator für die Analyse von Kohlenstoff (C) und Schwefel (S) in Metallen und anderen anorganischen Substanzen, mit einem vertikalen Verbrennungsrohr, das eine außen liegende Induktionsspule aufweist, mit einer einen Probentiegel für die Probe in das Verbrennungsrohr im Bereich der Induktionsspule einbringenden Beschickungsvorrichtung und mit einer Sauerstoffzuführung und einer Trägergaszuführung an dem oberen Ende des Verbrennungsrohrs.

Solche Analysatoren sowie die entsprechenden Verfahren sind bekannt und werden umfangreich eingesetzt. Beispielsweise beschreibt die WO 2012/097784 A1 eine Vorrichtung zur Verbrennungsanalyse, die einen Induktionsofen mit einer Ofenkammer einsetzt. Im Betrieb strömt ein Trägergas von einem Gaseinlass zu einem Gasauslass am oberen Ende der Ofenkammer. Die Probe wird während der Verbrennung in einem Probenbehälter aufgenommen. Für die Beschickung wird die Probe durch eine Beschickungsvorrichtung von unten in das vertikale Ofenrohr eingebracht. Oberhalb des Tiegels befindet sich ein Schutzelement, um zu verhindern, dass die bei der Verbrennung der Probe entstehenden Gase und Partikel, wie beispielsweise Staub und andere Verbrennungsrückstände, sowie Bestandteile, die bei der Verbrennung aus dem Tiegel spritzen, an die Ofenwand gelangen und sich dort festsetzen. Als Ofenrohr ist ein solches aus Quarzglas angegeben.

Die DE 10 2005 014 705 A1 beschreibt ein Verfahren und eine Vorrichtung für die simultane Bestimmung der Isotopenverhältnisse der Elemente Kohlenstoff, Stickstoff, Schwefel und Wasserstoff unter Einsatz einer Isotopenverhältnis-Massenspektrometer-Analytik (IRMS) in Verbindung mit einer Analysenvorrichtung.

Die Analysevorrichtung weist einen Verbrennungsofen zur Verbrennung der Probe, der rohrförmig aufgebaut ist, auf. Im unteren Bereich des rohrförmigen Verbrennungsofens ist ein Oxidationskatalysator, beispielsweise Wolfram-VI-oxid, eingefüllt, auf dem ein Tiegel zur Aufnahme einer Probe aufgesetzt ist. Der Probenzuführungskopf besitzt eine Zuführungsleitung für Sauerstoff und eine Zuführleitung für Trägergas. Für die Verbrennung der Probe wird die erforderliche Menge an Sauerstoff unmittelbar durch eine Lanze zugeführt, die sich mit ihrem Ende direkt in den Tiegel hinein erstreckt.

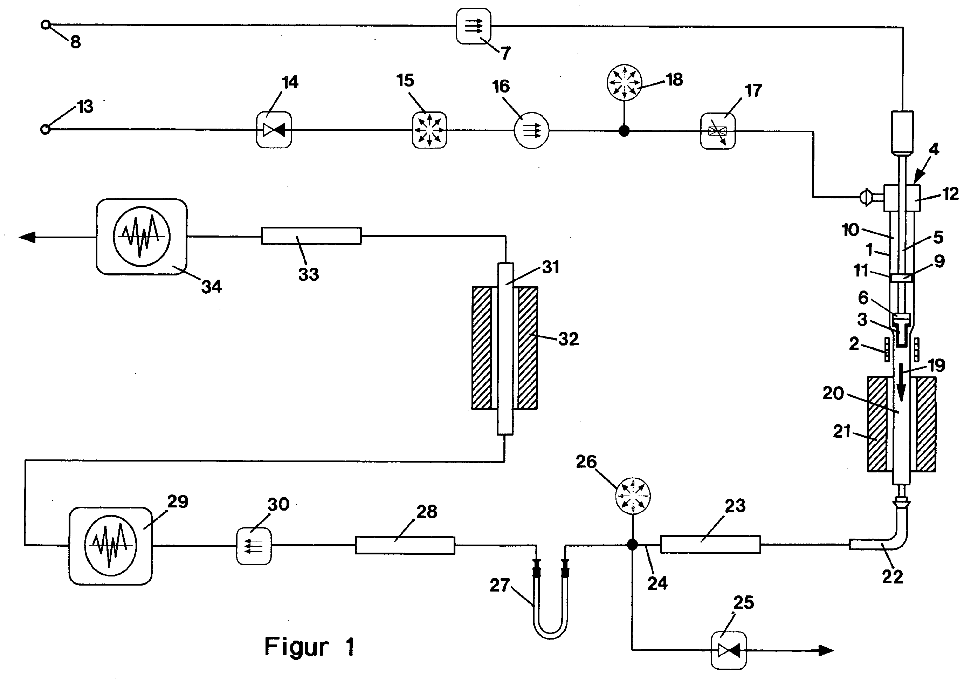

Die JP 60-11084 (WPI-abstract) betrifft, soweit aus Figur 1 erkennbar ist, eine Analysevorrichtung, bei der in einem Ofenrohr ein Tiegel eingesetzt wird, der von dem unteren Ende des Ofenrohrs zugeführt wird. Als Besonderheit wird der Tiegel, wie sich aus den Figuren ergibt und in dem Abstract beschrieben ist, durch einen Deckel vollständig verschlossen, um zu verhindern, dass Staub und Spritzer aus geschmolzenem Metall während der Verbrennung aus dem Tiegel austreten können. O₂ wird sowohl von oben als auch von unten in das vertikale Ofenrohr zugeführt.

Die JP 7-98307 A (WPI-abstract) beschreibt im Wesentlichen nur einen zylindrischen Tiegel, der in einem Verbrennungsrohr einer Analysevorrichtung eingesetzt wird. Dieser zylindrische Tiegel besitzt eine Öffnung an einem Ende und ein Gasbelüftungsloch an dem anderen Ende, d.h. in der Bodenfläche des Tiegels. In das obere offene Ende des Tiegels ist ein Trichter, mit einer Form ähnlich eines Kegelstumpfes, so eingesetzt, dass er in den Tiegel hineinragt. Das obere Ende des Trichters dient als Probeneinfüllloch und das untere Ende dient als Probenabgabeöffnung, um den zylindrischen Tiegel zu befüllen. In Figur 1 ist der Trichter so dargestellt, dass zwischen dem oberen Rand des zylindrischen Tiegels und dem konischen Teil des Trichters ein Spalt verbleibt. In der Darstellung der Figur 4 ist jedoch der Trichter formschlüssig auf den oberen Rand des Tiegels aufgesetzt, wozu der Rand des Tiegels an die Konizität des Trichters angepasst ist. Wie dem Abstract zu entnehmen ist, soll mit dem Trichter ein Entweichen bzw. ein Rückfluss von verdampften, organischen Bestandteilen in der Richtung entgegengesetzt der Zuführung eines Trägergases verhindert werden.

Die EP 2 224 238 A2 beschreibt eine Vorrichtung und ein Verfahren zur Elementaranalyse. Die dargestellte Vorrichtung zeigt nur schematisch ein Verbrennungsrohr mit einer darin eingesetzten Probenaufnahme und einem an dem oberen Ende des Verbrennungsrohrs angeordneten Probengeber. Der Probengeber umfasst einen Anschluss für Trägergas, einen Anschluss für Spülgas und einen weiteren Anschluss für Sauerstoff.

Ausgehend von dem vorstehend beschriebenen Stand der Technik liegt der Erfindung die Aufgabe zugrunde, einen Analysator anzugeben, der zumindest einen Teil der vorstehend angegebenen Nachteile der bekannten Analysatoren und der damit durchgeführten Verfahren vermeidet.

Gelöst wird die Aufgabe durch einen Analysator mit den Merkmalen des Anspruchs 1. Vorteilhafte Weiterbildungen des Analysators ergeben sich aus den abhängigen Ansprüchen.

Mit dem erfindungsgemäßen Analysator erfolgt die Beschickung der Probe von dem oberen Ende des Verbrennungsrohrs aus. Weiterhin werden die Verbrennungsprodukte an dem unteren Ende des Verbrennungsrohrs, das vertikal ausgerichtet ist, abgeführt. Darüber hinaus erfolgt die Sauerstoffzuführung von dem oberen Ende des Verbrennungsrohrs aus durch eine Sauerstofflanze, die Teil einer Beschickungsvorrichtung ist und die eine Blende aufweist, die den Querschnitt des Verbrennungsrohrs oberhalb des Probentiegel, einen Ringspalt zu der Innenseite des Verbrennungsrohrs belassend, abschließt. Über diesen Ringspalt, der vorzugsweise nur eine Breite von 1 bis 2 mm aufweist, wird ein Trägergas, bevorzugt synthetische Luft, so zugeführt, dass das Gas den Tiegel umströmt.

Dadurch, dass die Beschickung der Probe, und auch die Zuführung des Trägergases, von dem oberen Ende des Verbrennungsrohrs aus erfolgt, wird erreicht, dass staubförmige Verbrennungsprodukte nach unten abgeführt werden und dadurch keine Verschmutzung des Verbrennungsrohres stattfindet. Mit der Sauerstoffzuführung und Trägergaszuführung über das obere Ende des Verbrennungsrohrs bzw. der Beschickungsvorrichtung und durch Abführung der Verbrennungsprodukte an dem unteren Ende des Verbrennungsrohrs ergibt sich auch eine laminare Strömung um den Probentiegel herum. Die Verbrennungsgase, aber auch die weiteren Verbrennungsprodukte, werden nach unten abgeführt, wobei die Blende an der Sauerstofflanze oberhalb des Tiegels, die dort den Querschnitt des Verbrennungsrohrs verschließt, ein Verspritzen von Schlacke und anderen Bestandteilen in Bereiche außerhalb des Probentiegels verhindert.

Eine solche Blende oberhalb des Tiegels verhindert insbesondere auch, dass WO₃-Staub, der dadurch entsteht, dass als Beschleuniger Wolfram eingesetzt wird, oder Metalloxide oder unverbrannte Metalle entgegen der Hauptströmungsrichtung des Trägergases zur oberen Abdichtung des Reaktionsraums gelangen und dort Schäden, insbesondere an beweglichen Bauteilen, hervorrufen.

Über die Sauerstofflanze kann der Sauerstoff unmittelbar dosiert der Probe während der Verbrennung zugeführt werden.

Weiterhin findet ein optimierter Verbrennungsablauf dadurch statt, dass die O₂-Konzentration während der Verbrennung individuell eingestellt werden kann, wodurch sich zum Beispiel die Auffindung von Schwefel in bestimmten Proben deutlich verbessert.

Der erfindungsgemäße Analysator wird insbesondere auch für die Analyse von Kohlenstoff und Schwefel in Metallen und anderen anorganischen Substanzen, wie zum Beispiel Keramik oder Zement, eingesetzt.

Bei der Analyse von Keramik und Zement auf den Gehalt von Kohlenstoff und Schwefel ist mit den erfindungsgemäßen Maßnahmen der Aufwand für die Vorbereitung der Probe nur gering; außerdem kann die Analyse mit einer hohen Reproduzierbarkeit durchgeführt werden.

In einer Weiterbildung des Analysators ist in dem Verbrennungsrohr, in Strömungsrichtung der Verbrennungsprodukte gesehen, unterhalb des Probentiegels eine Nachverbrennungszone angeordnet. Durch diese Nachverbrennungszone, die auf Temperaturen größer 400 °C, maximal auf 1100 °C bis 1200 °C, aufgeheizt wird, werden Schwefel und Kohlenstoff enthaltende Stäube verbrannt bzw. wird die Adsorption an Stäuben oder der Ofenwandung minimiert; ohne eine solche Nachverbrennungszone kann die Erfassung des in der Probe enthaltenen Schwefels und Kohlenstoffs verfälscht werden bzw. können die erfassten Gehalte geringer als die tatsächlichen Gehalte sein.

In einem bevorzugten Aufbau des Analysators ist eine temperaturgesteuerte SO₂-Adsorptionssäule zur Trennung von Kohlenstoffdioxid (CO₂) und Schwefeldioxid (SO₂) vorgesehen, die dazu dient, spektrale IR-Interferenzen in den IR-Detektoren zu vermeiden und eine Peakfokussierung zu erreichen, das bedeutet, dass durch diese Maßnahmen eine Herabsetzung der unteren Nachweisgrenze und dadurch ein verbessertes Analyseergebnis erreicht werden kann. Auch ergibt sich ein verbessertes Signal-Rausch-Verhältnis, da für die Detektion ein stark ausgeprägter Peak mit geringer Halbwertsbreite erhalten wird.

Neben der Nachverbrennungszone, die vorstehend angegeben ist, kann, in Strömungsrichtung der Verbrennungsprodukte gesehen, nach der SO₂-Adsorptionssäule ein weiteres Nachverbrennungsrohr angeordnet werden, das eine zweite Nachverbrennungszone bildet. Dieses Nachverbrennungsrohr ist bevorzugt mit Kupferoxid (CuO) gefüllt. In diesem Nachverbrennungsrohr, das auf eine Temperatur von etwa 900 °C aufgeheizt wird, wird bei der Verbrennung entstehendes CO zu CO₂ aufoxidiert, das in dem Trägergasstrom nach der SO₂-Adsorptionssäule noch mitgeführt wird. Der Anteil an Schwefeldioxid (SO₂) wird in einem Analysator nach der SO₂-Adsorptionssäule und einem Mass-Flow-Controller in einem IR-Detektor (Infrarot-Detektor) für SO₂ erfasst, während der Anteil an Kohlenstoffdioxid (CO₂) nach der weiteren Nachverbrennungszone in einem IR-Detektor (Infrarot-Detektor) für CO₂ ermittelt wird.

Im Unterschied zum Stand der Technik, bei dem nach Verbrennung des Metalls (oder einer anderen anorganischen Probe) ein Gemisch von CO₂ und SO₂ ohne Trennung den Infrarot-Detektoren für CO₂ bzw. SO₂ zugeführt wird, erfolgt mit dieser Maßnahme eine Adsorption des SO₂ aus dem Gasgemisch auf einer thermisch kontrollierten Adsorptionssäule. Dadurch wird zuerst das CO₂ im Luft/Sauerstoff-Trägergasstrom analysiert und nachfolgend das SO₂ durch Temperaturerhöhung der Adsorptionssäule freigesetzt und ebenfalls mittels Infrarot-Detektion bestimmt. Dadurch werden spektrale Interferenzen der beiden Gase CO₂ und SO₂ vermieden, was wesentlichen Einfluss auf die Richtigkeit der Ergebnisse hat (insbesondere bei großen Überschüssen von C gegenüber S in der Probe). Gleichzeitig erfolgt eine Peakfokussierung des SO₂, was Vorteile bei der Analyse niedriger Schwefel-Gehalte bedeutet.

Weitere Einzelheiten und Merkmale der Erfindung ergeben sich aus der nachfolgenden Beschreibung eines Ausführungsbeispiels anhand der Zeichnung. In der Zeichnung zeigt die einzige Figur, mit Figur 1 bezeichnet, ein schematisches Diagramm eines Analysators gemäß der Erfindung.

Der Analysator, wie er in der Figur 1 schematisch dargestellt ist, wird für die Analyse von Kohlenstoff (C) und Schwefel (S) in Metallen und anderen anorganischen Substanzen eingesetzt.

Er umfasst ein mit der Rohrachse vertikal ausgerichtetes Verbrennungsrohr 1, das im Bereich der Verbrennungszone mit einer außen außerhalb des Verbrennungsrohrs 1 liegenden Induktionsspule 2 beheizt wird. Zur Verbrennung wird die Probe mittels Tiegel 3 in die Verbrennungszone eingebracht. Hierzu wird eine Beschickungsvorrichtung 4 eingesetzt. Diese Beschickungsvorrichtung 4 besteht aus einem Stab oder Rohr 5, an dessen Ende sich ein Greifkopf 6 befindet, mit dem der Tiegel 3 gehalten wird. Wie anhand der Figur zu erkennen ist, wird der Tiegel 3 mit der Probe von dem oberen Ende des vertikal ausgerichteten Verbrennungsrohrs 1 in die Verbrennungszone eingebracht. Der Stab oder das Rohr 5 dient gleichzeitig als Sauerstofflanze, um für die Verbrennung der Probe Sauerstoff zuzuführen. Hierzu ist das Rohr 5 an seinem oberen Ende über einen Durchflussregler 7 mit einer Sauerstoffversorgung 8 verbunden.

Die Sauerstofflanze bzw. das Rohr 5 der Beschickungsvorrichtung 4 ist von einer Blende 9 umgeben, die den Ringraum 10 zwischen dem Rohr 5 und der Innenseite des Verbrennungsrohrs 1 so verschließt, dass zwischen dem Außenumfang der Blende 9 und der Innenseite bzw. Innenwand des Verbrennungsrohrs 1 ein schmaler Ringspalt 11 verbleibt. Über diesen Ringspalt 11 umströmt ein Trägergas die Blende 9, das danach auch den Tiegel 3 umströmt. Vorzugsweise handelt es sich bei dem Trägergas um synthetische Luft.

Für die Zuführung des Trägergases ist an dem oberen Ende des Verbrennungsrohrs 1 ein Kopfteil 12 angeordnet, das mit einer Trägergasquelle 13 über ein Absperrventil 14, einen Druckregler 15, einen Durchflussmesser 16 und ein Dosierventil 17 verbunden ist. Der Druck in der Versorgungsleitung wird mit einem Druckmessgerät 18 zwischen dem Durchflussmesser 16 und dem Dosierventil 17 gemessen.

Die in dem Tiegel 3 befindliche Probe wird induktiv je nach Art der Probe bei Temperaturen von größer 2000 °C verbrannt. Die Blende 9 oberhalb des Tiegels 3 verhindert, dass Verbrennungsprodukte der Probe in den oberen Bereich des vertikalen Verbrennungsrohrs 1 entgegen der Hauptströmungsrichtung des Trägergases, das von oben dem Verbrennungsrohr 1 zugeführt wird, gelangen.

Unterhalb des Tiegels 3, in Richtung der Strömung des Trägergases, durch den Pfeil 19 angedeutet, gesehen, befindet sich ein erstes Nachverbrennungsrohr 20, das durch eine Heizung 21 auf Temperaturen von 400 °C bis maximal 1200 °C aufgeheizt wird. Durch diese Nachverbrennungszone wird die Verbrennung unverbrannter Stäube erreicht, so dass eine Verbesserung der Auffindung von Kohlenstoff (C) und Schwefel (S) erreicht wird.

Nach dem Nachverbrennungsrohr 20 werden die Verbrennungsprodukte mit dem Trägergas durch einen Filter 22 geführt, mit dem staubförmige Metalloxide, insbesondere WO₂-Stäube, aus dem Trägergasstrom entfernt werden. Anschließend wird der Trägergasstrom in einer Trocknungseinrichtung 23 getrocknet. Der Druck in der Trägergasleitung 24 wird nach der Trocknungseinrichtung 23 erfasst. Die Erfassung des Drucks in der Trägergasleitung 24 erfolgt über ein Druckmessgerät 26. Ein Ventil 25 erzeugt vor der Beschickung einen Druckabbau.

Nach der Trocknungseinrichtung 23 folgt eine temperaturgesteuerte SO₂-Adsorptionssäule 27 zur Trennung von Kohlendioxid (CO₂) und Schwefeldioxid (SO₂). Diese SO₂-Adsorptionssäule 27 (ein U-Rohr) ist mit Silicagel gefüllt und dient dazu, spektrale Interferenzen zu vermeiden. Ohne eine solche SO₂-Adsorptionssäule 27 könnten ansonsten spektrale Interferenzen zwischen CO₂ und SO₂ auftreten. Außerdem wird durch diese SO₂-Adsorptionssäule 27 eine Peakfokussierung erreicht, das bedeutet es wird eine deutliche Verbesserung des Signal-Rausch-Verhältnisses erreicht.

Nach der Trennung von Kohlendioxid und Schwefeldioxid wird der Gasstrom erneut in einer weiteren Trocknungseinrichtung 28 getrocknet und einem IR-Detektor 29 für Schwefeldioxid (SO₂₎ über einen Durchflussregler 30 zugeführt.

An den IR-Detektor 29 schließt sich, und somit im Anschluss an die SO₂-Adsorptionssäule 27, ein weiteres Nachverbrennungsrohr 31 an, das mit Kupferoxid (CuO) gefüllt ist und mittels einer Außenheizung 32 auf eine Temperatur von etwa 900 °C aufgeheizt wird. Durch diese Nachverbrennung werden die im Trägergasstrom mitgeführten CO-Bestandteile zu CO₂ aufoxidiert, um den Trägergasstrom dann über eine Trocknungseinrichtung 33 einem IR-Detektor 34 für Kohlenstoffdioxid (CO₂) zuzuführen.

## Patentansprüche

1. Analysator für die Analyse von Kohlenstoff (C) und Schwefel (S) in Metallen und anderen anorganischen Substanzen, mit einem vertikalen Verbrennungsrohr (1), das eine außen liegende Induktionsspule (2) aufweist, mit einer einen Probentiegel (3) für die Probe in das Verbrennungsrohr (1) im Bereich der Induktionsspule (2) einbringenden Beschickungsvorrichtung (4) und mit einer Sauerstoffzuführung (8) und einer Trägergaszuführung (13) an dem oberen Ende des Verbrennungsrohrs (1), **dadurch gekennzeichnet, dass** die Sauerstoffzuführung über eine Sauerstofflanze (5) erfolgt, die ein Teil der Beschickungsvorrichtung (4) ist und die aus einem Stab oder Rohr (5) besteht, an dessen Ende sich ein den Tiegel (3) aufnehmender Greifkopf (6) befindet, wobei die Probe von dem oberen Ende des Verbrennungsrohrs (1) aus zugeführt wird, dass die Verbrennungsprodukte an dem unteren Ende des Verbrennungsrohrs (1) abgeführt werden und dass die Sauerstofflanze (5) eine Blende (9) oberhalb des Tiegels (3) aufweist, die den Querschnitt des Verbrennungsrohrs (1) oberhalb des Probentiegels (3), einen Ringspalt (11) zu der Innenseite des Verbrennungsrohrs (1) belassend, über den ein Trägergas (13) den Tiegel (3) umströmend zuführbar ist, abschließt.

2. Analysator nach Anspruch 1, **dadurch gekennzeichnet, dass** in dem Verbrennungsrohr (1), in Strömungsrichtung der Verbrennungsprodukte gesehen, unterhalb des Probentiegels (3) eine Nachverbrennungszone (20) angeordnet ist.

3. Analysator nach Anspruch 1 oder 2, **dadurch gekennzeichnet, dass** eine temperaturgesteuerte SO₂-Adsorptionssäule (27) zur Trennung von Kohlenstoffdioxid (CO₂) und Schwefeldioxid (SO₂) vorgesehen ist.

4. Analysator nach Anspruch 2, **dadurch gekennzeichnet, dass** eine temperaturgesteuerte SO₂-Adsorptionssäule (27) zur Trennung von Kohlenstoffdioxid (CO₂) und Schwefeldioxid (SO₂) vorgesehen ist, und dass, in Strömungsrichtung der Verbrennungsprodukte gesehen, nach der SO₂-Adsorptionssäule (27) eine weitere Nachverbrennungszone (31) angeordnet ist.

## Claims

1. Analyzer for analyzing carbon (C) and sulfur (S) in metals and other inorganic substances, with a vertical combustion tube (1) which comprises an external induction coil (2), with a charging device (4) which introduces a sample crucible (3) for the sample into the combustion tube (1) in the region of the induction coil (2), and with an oxygen supply (8) and a carrier gas supply (13) at the upper end of the combustion tube (1), **characterized in that** the oxygen supply is carried out via an oxygen lance (5) which is part of the charging device (4) and consists of a rod or tube (5), at the end of which a gripping head (6) which receives the crucible (3) is positioned, wherein the sample is supplied from the upper end of the combustion tube (1), that the combustion products are discharged at the lower end of the combustion tube (1), and that the oxygen lance (5) comprises a baffle (9) above the crucible (3), which baffle closes off the cross-section of the combustion tube (1) above the sample crucible (3), leaving an annular gap (11) to the inside of the combustion tube (1), via which a carrier gas (13) can be supplied flowing around the crucible (3).

2. Analyzer according to claim 1, **characterized in that** a post-combustion zone (20) is arranged in the combustion tube (1) below the sample crucible (3), viewed in the direction of flow of the combustion products.

3. Analyzer according to claim 1 or 2, **characterized in that** a temperature-controlled SO₂ adsorption column (27) is provided for separating carbon dioxide (CO₂) and sulfur dioxide (SO₂).

4. Analyzer according to claim 2, **characterized in that** a temperature-controlled SO₂ adsorption column (27) is provided for separating carbon dioxide (CO₂) and sulfur dioxide (SiO₂), and that a further post-combustion zone (31) is arranged after the SiO₂ adsorption column (27), viewed in the direction of flow of the combustion products.

## Revendications

1. Analyseur pour l'analyse du carbone (C) et du soufre (S) dans le métaux et d'autres substances inorganiques, avec un tube de combustion (1) vertical, qui comporte une bobine d'induction (2) située à l'extérieur, avec un dispositif de chargement (4) introduisant un creuset à échantillon (3) pour l'échantillon dans le tube de combustion (1) dans le domaine de la bobine d'induction (2) et avec une amenée d'oxygène (8) et une amenée de gaz vecteur (13) à l'extrémité supérieure du tube de combustion (1), **caractérisé en ce que** l'amenée d'oxygène a lieu par le biais d'une lance à oxygène (5) qui fait partie du dispositif de chargement (4) et qui consiste en une barre ou tube (5) à l'extrémité de laquelle se trouve une tête de saisie (6) recevant le creuset (3), où l'échantillon est amené depuis l'extrémité supérieure du tube de combustion (1), **en ce que** les produits de combustion sont évacués à l'extremité inférieure du tube de combustion (1) et **en ce que** la lance à oxygène (5) comporte un obturateur (9) au-dessus du creuset (3), qui ferme la section droite du tube de combustion (1) au-dessus du creuset à échantillon (3), en laissant un interstice annulaire (11) vers le côté interne du tube de combustion (1), par lequel peut être amené un gaz vecteur (13) qui s'écoule autour du creuset (3).

2. Analyseur selon la revendication 1, **caractérisé en ce qu'**une zone de postcombustion (20) est disposée dans le tube de combustion (1), vu dans la direction d'ecoulement des produits de combustion, au-dessous du creuset à échantillon (3).

3. Analyseur selon la revendication 1 ou 2, **caractérisé en ce qu'**il est prévu une colonne d'adsorption de SO₂ (27) commandée en température pour la séparation du dioxyde de carbone (CO₂) et du dioxyde de soufre (SO₂).

4. Analyseur selon la revendication 2, **caractérisé en ce qu'**il est prévu une colonne d'adsorption de SO₂ (27) commandée en température pour la séparation du dioxyde de carbone (CO₂) et du dioxyde de soufre (SO₂) et **en ce que**, vue dans la direction d'écoulement des produits de combustion, une autre zone de postcombustion (31) est disposée après la colonne d'adsorption de SO₂ (27).
